# FASCICULE DE BREVET EUROPEEN

(11) **EP 2 190 738 B1**
(45) Date de publication et mention de la délivrance du brevet: **23.02.2011**
(21) Numéro de dépôt: 08854440.8
(22) Date de dépôt: 16.09.2008
(51) Int. Cl.: B64C 33/02

(54) **ENGIN VOLANT A AILES BATTANTES**
FLUGVORRICHTUNG MIT SCHLAGENDEN FLÜGELN
FLYING DEVICE WITH FLAPPING WINGS

(30) Priorité: 20.09.2007 FR 0706616
(43) Date de publication de la demande: 02.06.2010
(73) Titulaire: Université Paris Sud, 91405 Orsay Cedex (FR); Centre National de la Recherche Scientifique, 75016 Paris (FR); Universite Pierre Et Marie Curie - Paris 6, 75005 Paris (FR)
(72) Inventeur: MARTINELLI, Pascal, F-94110 Arcueil (FR); RAVASI, Thomas, F-93300 Aubervilliers (FR); GRAND, Christophe, F-94800 Villejuif (FR); DONCIEUX, Stéphane, F-94800 Villejuif (FR); MOURET, Jean-Baptiste, F-75013 Paris (FR); DE MARGERIE, Emmanuel, F-35200 Rennes (FR)
(74) Mandataire: Parzy, Benjamin Alain
(86) Numéro de dépôt international: PCT/FR2008/001294
(87) Numéro de publication internationale: WO 2009/068762

(56) Documents cités:
- WO-A-2008/010830
- FR-A- 419 140
- GB-A- 364 986

## Description

L'invention concerne un engin volant à vol battu, du type ornithoptère.

### ARRIERE-PLAN DE L'INVENTION

On connaît des engins volants équipés de deux ailes battantes. Divers mécanismes ont été proposés pour actionner les ailes. Beaucoup d'entre eux font appel à un système de bielle et de manivelle actionnée par un moteur électrique. Pour faire varier la fréquence de battement, il suffit de jouer sur la vitesse de rotation du moteur électrique. Cependant, ces systèmes ne permettent pas de faire varier l'amplitude du battement, sauf à prévoir un actionneur supplémentaire.

L'art antérieur est notamment illustré par les documents FR419140, GB364986 et WO2008/010830

### OBJET DE L'INVENTION

L'invention a pour objet un dispositif pour le battement d'aile très simple, permettant de réguler à la fois la fréquence et l'amplitude des battements des ailes

### BREVE DESCRIPTION DE L'INVENTION

Selon l'invention, on propose un engin volant à ailes battantes, l'engin comportant un châssis sur lequel deux pivots sont montés à pivotement selon deux axes d'articulation parallèles, chacun des pivots portant une aile. Selon l'invention, l'engin comporte un premier générateur d'oscillations pour provoquer une oscillation des pivots en vue de provoquer un battement des ailes, ledit premier générateur d'oscillations comprenant :
- deux bras solidaires chacun d'un des pivots;
- deux manivelles articulées chacune à l'extrémité d'un des bras selon des axes parallèles aux axes d'articulation des pivots ;
- une bielle articulée aux extrémités des deux manivelles selon des axes parallèles aux axes d'articulation des pivots;
- des moyens de synchronisation de la rotation des deux pivots de sorte que les pivots aient des rotations égales et opposées;
- deux moteurs électriques disposés pour commander chacun une rotation de l'une des manivelles vis-à-vis du bras associé ;
- des moyens de commande pour commander et synchroniser la vitesse de rotation des moteurs et pour commander un déphasage entre les moteurs.

En faisant tourner les deux moteurs continûment à la même vitesse, on obtient un battement alternatif des deux ailes. En jouant sur le déphasage entre les deux moteurs, on règle l'amplitude du mouvement de battement. On peut éventuellement obtenir une absence de battement, en faisant en sorte que les moteurs soient en phase, c'est-à-dire en faisant en sorte que les manivelles restent parallèles entre elles.

Ainsi, à l'aide de deux paramètres simples à contrôler (vitesse commune et déphasage des moteurs), on parvient à commander la fréquence et l'amplitude des battements des ailes.

On notera que la vitesse de rotation des moteurs peut ne pas être constante. Il importe cependant que les moteurs restent synchronisés entre eux, sauf à introduire dans le système un degré de liberté supplémentaire.

### BREVE DESCRIPTION DES DESSINS

L'invention sera mieux comprise à la lumière de la description qui suit en référence aux figures des dessins annexés parmi lesquelles :
- la figure 1 est une vue en perspective de trois-quart avant partiellement écorchée d'un dispositif selon un mode particulier de réalisation de l'invention, l'une des ailes étant représentée en pointillés;
- la figure 2 est une vue en perspective de trois-quart arrière partiellement écorchée du dispositif illustré à la figure 1, l'une des ailes étant représentée en pointillés ;

- la figure 3 est une vue de face du dispositif de la figure 1, montrant un cas de fonctionnement dans lequel les moteurs sont en phase ;
- la figure 4 est une vue de face du dispositif de la figure 1, montrant un cas de fonctionnement dans lequel les moteurs sont déphasés.

### DESCRIPTION DETAILLEE DE L'INVENTION

En référence aux figures, et conformément à un mode particulier de réalisation de l'invention, le dispositif comporte un châssis 1 portant deux pivots 2 montés tournants sur le châssis selon des axes X parallèles. Sur la partie écorchée du châssis 1, on distingue les roulements 3 de support de l'un des pivots 2.

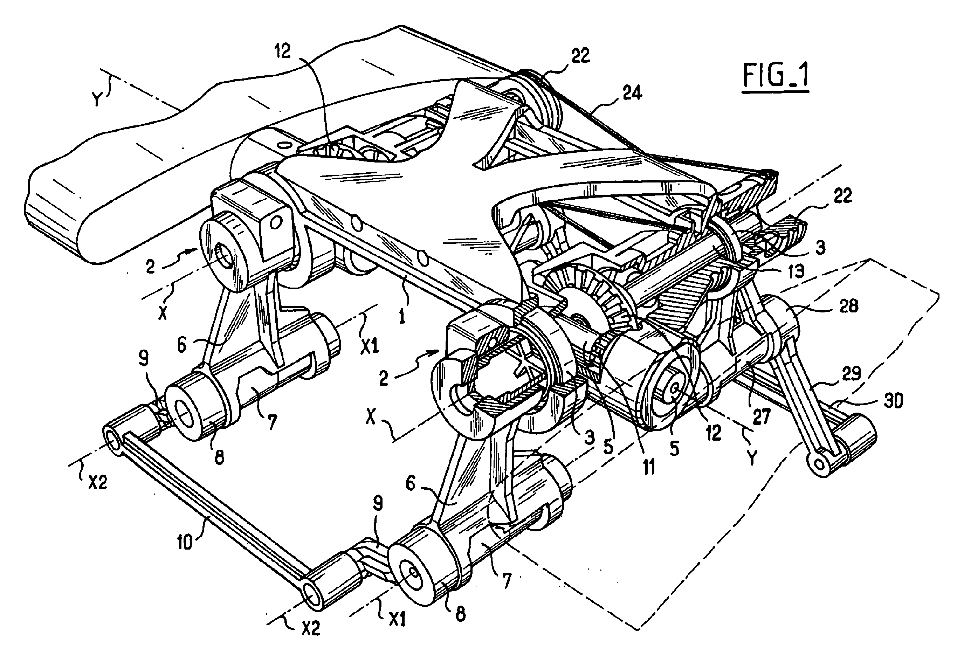

Chaque pivot 2 porte un support pivotant 5 qui est monté à rotation dans le pivot selon un axe Y perpendiculaire à l'axe X (seul le support pivotant du pivot gauche est visible à la figure 1). L'aile est attachée directement sur le support pivotant 5 de sorte qu'elle s'étende en envergure sensiblement selon l'axe Y. Ainsi, une oscillation alternative d'un des pivots 2 selon l'axe X provoque un battement de l'aile associée, tandis qu'une oscillation du support pivotant 5 selon l'axe Y provoque une variation d'incidence de l'aile associée.

On va maintenant décrire en détail un premier générateur d'oscillations contrôlant le battement des ailes. Le générateur d'oscillations comporte tout d'abord une courroie 4 croisée engagée dans des gorges des pivots 2 permet la synchronisation angulaire de ces derniers de sorte que lorsque l'un des pivots 2 tourne d'un angle donné, l'autre pivot tourne d'un angle égal et opposé. En variante, on pourra utiliser une liaison par engrenages, ou tout autre système mécanique passif permettant de synchroniser les rotations respectives des deux pivots 2.

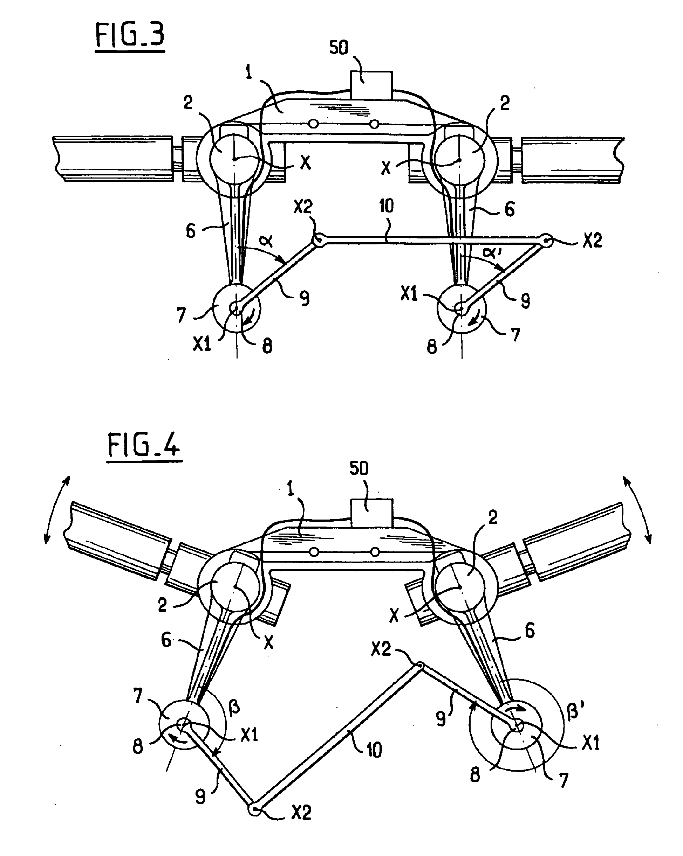

Le premier générateur d'oscillations comporte des bras 6 qui sont solidaires chacun d'un des pivots 6 et qui s'étendent pour recevoir à leur extrémité un moteur électrique 7 ayant un arbre de sortie qui comporte une extrémité tournante 8 selon un axe X1 parallèle à l'axe X. Ici, les bras 6 s'étendent vers le bas et sont sensiblement verticaux lorsque les axes Y s'étendent selon l'horizontale, comme cela est particulièrement visible à la figure 3. Chaque extrémité tournante 8 porte une manivelle 9. Les extrémités des manivelles 9 sont articulées à une bielle 10 selon des axes X2 également parallèles aux axes X.

Ici, les bras 6 ont une longueur (mesurée entre les axes X et X1) supérieure à la longueur des manivelles 9 (mesurée entre les axes X1 et X2), tandis que la bielle 10 a une longueur (mesurée entre les deux axes X2) équivalente à la distance entre les axes X.

Le battement des ailes est obtenu de la façon suivante. A la figure 3, les moteurs électriques 7 tournent dans le même sens et à la même vitesse. Les manivelles 9 sont parallèles entre elles de sorte que les angles α et α' restent à tout instant égaux. On dira que les moteurs électriques 7 sont en phase. Ce mouvement ne provoque aucune oscillation des bras 6, et, partant, des pivots 2. Les ailes ne battent pas.

A la figure 4, les moteurs électriques 7 tournent à la même vitesse, mais ils sont déphasés. L'une des manivelles 9 est décalée angulairement par rapport à l'autre manivelle. Les angles β et β' ne sont pas égaux. La rotation continue des moteurs électriques 7 dans le même sens et à même vitesse induit une oscillation de battement des bras 6 et, partant, des pivots 2. Les ailes battent en oscillant autour des axes X.

Les moteurs électriques 7 comportent ici chacun un capteur de position angulaire et sont reliés à un boîtier de commande 50 qui alimente les moteurs et reçoit les informations des capteurs. Pour faire varier la fréquence du battement, le boîtier de commande 50 fait varier la vitesse de rotation des moteurs électriques 7, en veillant à ce que les moteurs soient synchronisés et aient la même vitesse de rotation. Pour faire varier l'amplitude des battements, le boîtier de commande 50 fait varier le déphasage entre les deux moteurs électriques 7, par exemple en ralentissant temporairement l'un des moteurs jusqu'à ce que le déphasage souhaité soit obtenu, puis en réaccélérant ledit moteur pour le faire tourner à la même vitesse que l'autre moteur.

On va maintenant décrire en détail un second générateur d'oscillations permettant de contrôler l'incidence des ailes. Ce générateur d'oscillations est d'un principe similaire à celui du premier générateur d'oscillations. Il est rappelé que chaque aile est solidaire non pas directement du pivot 2 correspondant, mais du support pivotant 5 qui monté tournant dans le pivot selon l'axe Y.

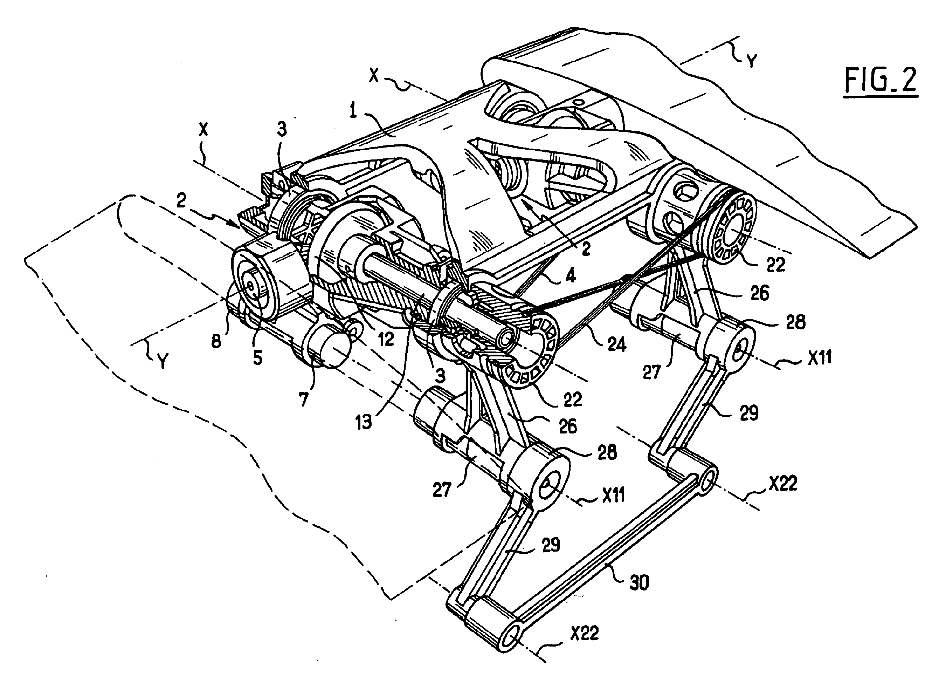

Revenant aux figures 1 et 2, on constatera que chaque support pivotant 5 comporte un pignon conique 11 qui coopère avec un pignon conique 12 monté en extrémité d'un arbre d'entraînement 13 qui est monté tournant dans le pivot 2 selon l'axe X. Les deux pignons coniques forment un renvoi d'angle liant une rotation du support pivotant 5 autour de l'axe Y à une rotation de l'arbre d'entraînement 13 correspondant autour de l'axe X. L'autre extrémité de chaque arbre d'entraînement 13 est solidaire d'un manchon 22. Les manchons 22 sont synchronisés en rotation au moyen d'une courroie croisée 24 de sorte qu'une rotation de l'un des arbres d'entraînement 13 dans un sens provoque une rotation de même angle et en sens inverse de l'autre arbre d'entraînement 13.

Chaque manchon 22 comporte un bras 26 qui s'étend pour recevoir à son extrémité un moteur électrique 27 ayant une extrémité tournante 28 selon un axe X11 parallèle à l'axe X. Ici, les bras 26 s'étendent vers le bas et sont sensiblement verticaux lorsque les axes Y s'étendent selon l'horizontale. Chaque extrémité tournante 28 porte une manivelle 29. Les extrémités des manivelles 9 sont articulées à une bielle 30 selon des axes X22 également parallèles aux axes X.

Ici, les bras 26 ont une longueur (mesurée entre les axes X et X11) supérieure à la longueur des manivelles 9 (mesurée entre les axes X11 et X22), tandis que la bielle 30 a une longueur (mesurée entre les deux axes X22) équivalente à la distance entre les axes X.

Ce deuxième générateur d'oscillations fonctionne exactement comme le premier. Lorsque les moteurs électriques 27 sont en phase, les manivelles 29 restent parallèles entre elles, de sorte que les arbres d'entraînement 13 ne tournent pas. Ils restent immobiles en rotation. Aucune oscillation d'incidence n'est commandée par le deuxième générateur d'oscillations. Cependant, il est à noter que si le premier générateur d'oscillations est activé pour commander une oscillation de battement des ailes, cette oscillation de battement induit une oscillation d'incidence des ailes. En effet, du fait de la liaison par pignons coniques 11,12 entre le support pivotant 5 et l'arbre d'entraînement 13, une rotation du pivot 2 autour de l'axe X a pour effet de provoquer une rotation induite du support pivotant 5 alors même que l'arbre d'entraînement 13 reste immobile. Les ailes subissent donc une oscillation d'incidence induite, d'une fréquence identique à la fréquence d'oscillation de battement.

Au contraire, lorsque les moteurs électriques 27 sont déphasés, la rotation des manivelles 29 induit une oscillation commandée des bras 26, et, partant, des manchons 24 et donc des arbres d'entraînement 13. Cette oscillation est communiquée via les pignons coniques 11, 12 aux supports pivotants 5 qui oscillent à leur tour, ce qui provoque une oscillation d'incidence commandée des ailes qui s'ajoute à l'oscillation d'incidence induite du fait de l'oscillation des pivots 2 autour des axes X.

Le boîtier de commande 50 est également apte à commander les moteurs 27 du second générateur d'oscillations de la même façon que pour les moteurs électriques 7. On aura intérêt à adapter la vitesse de rotation des moteurs 27 pour faire en sorte que la fréquence d'oscillation d'incidence des ailes coïncide avec la fréquence d'oscillation de battement des ailes.

L'invention n'est pas limitée à ce qui vient d'être décrit, mais bien au contraire englobe toute variante entrant dans le cadre défini par les revendications.

En particulier, bien que l'on ait illustré un dispositif comportant un premier générateur d'oscillations pour contrôler le battement des ailes et un second générateur d'oscillations pour contrôler l'incidence, on pourra, tout en restant dans le cadre de l'invention, prévoir un dispositif équipé uniquement d'un générateur d'oscillations contrôlant le battement des ailes. Une oscillation d'incidence couplée à l'oscillation en battement est alors obtenue très simplement en immobilisant les arbres d'entraînement 13 en rotation. Le dispositif est alors simplifié, même s'il n'est plus possible de régler l'oscillation d'incidence en amplitude et en fréquence.

Si aucune oscillation d'incidence n'est désirée, il est possible de simplifier le dispositif en supprimant les arbres d'entraînement 13 et les supports pivotants et en solidarisant les ailes directement aux pivots 2.

Bien que, dans chacun des organes d'actionnement, on ait choisi de placer les moteurs en extrémité des bras, on pourra placer les moteurs sur le châssis, et lier la rotation des manivelles à celle des moteurs au moyen d'une transmission par courroie ou tout autre moyen de transmission connu. On diminue ainsi l'inertie de rotation autour des axes X des pivots ou des manchons.

## Revendications

1. Engin volant à ailes battantes, l'engin comportant un châssis sur lequel deux pivots sont montés à pivotement selon deux axes d'articulation parallèles (X), chacun des pivots portant une aile, l'engin comportant un premier générateur d'oscillations pour provoquer une oscillation des pivots en vue de provoquer un battement des ailes, le premier générateur d'oscillations comportant :
- deux bras (6) solidaires chacun d'un des pivots (2);
- des moyens de synchronisation (4) de la rotation des deux pivots de sorte que les pivots aient des rotations égales et opposées ;
**caractérisé en ce que** le premier générateur d'oscillation comporte en outre :
- deux manivelles (9) articulées chacune à l'extrémité d'un des bras selon des axes (X1) parallèles aux axes d'articulation (X) des pivots ;
- une bielle (10) articulée aux extrémités des deux manivelles selon des axes (X2) parallèles aux axes d'articulation (X) des pivots;
- deux moteurs électriques (7) disposés pour commander chacun une rotation de l'une des manivelles vis-à-vis du bras associé ;
- des moyens de commande (50) pour commander et synchroniser la vitesse de rotation des moteurs et pour commander un déphasage entre les moteurs.

2. Engin volant selon la revendication 1, dans lequel les moyens de synchronisation comportent une courroie croisée (4) tendue entre les pivots (2).

3. Engin volant selon la revendication 1, dans lequel les moteurs sont portés en extrémité des bras (6), chaque manivelle (9) étant solidaire d'une extrémité tournante (8) du moteur correspondant.

4. Engin volant selon la revendication 1, dans lequel les pivots (2) reçoivent des supports pivotants (5) qui sont montés tournants sur les pivots selon des axes (Y) perpendiculaires aux axes d'articulation (X), les ailes étant reliées directement aux supports pivotants, l'engin volant comportant un second générateur d'oscillations (11,12,13) pour provoquer une oscillation des supports pivotants en vue de provoquer une oscillation d'incidence des ailes, ledit second générateur d'oscillations comportant :
- deux arbres d'entraînement (13) montés tournants selon les axes d'articulation des pivots et reliés en rotation aux supports pivotants par renvoi d'angle (11,12) ;
- deux bras (26) solidaires chacun d'un des arbres d'entraînement ;
- deux manivelles (29) articulées chacune à l'extrémité d'un des bras selon des axes (X11) parallèles aux axes d'articulation (X) des pivots ;
- une bielle (30) articulée aux extrémités des deux manivelles selon des axes (X22) parallèles aux axes d'articulation (X) des pivots;
- des moyens de synchronisation (24) de la rotation des deux arbres d'entraînement de sorte que les arbres d'entraînement aient des rotations égales et opposées;
- deux moteurs électriques (27) disposés pour commander chacun une rotation de l'une des manivelles vis-à-vis du bras associé ;
- des moyens de commande (50) pour commander et synchroniser la vitesse de rotation des moteurs électriques (27) et pour commander un déphasage entre les moteurs électriques (27).

5. Engin volant selon la revendication 4, dans lequel les moyens de synchronisation comportent une courroie croisée (24) tendue entre les arbres d'entraînement (13).

6. Engin volant selon la revendication 4, dans lequel les moteurs électriques (27) du second générateur d'oscillations sont portés en extrémité des bras (26), chaque manivelle (29) étant solidaire d'une extrémité tournante (8) du moteur correspondant.

## Claims

1. A flapping-wing flying vehicle, the vehicle including a frame having two pivots mounted thereon to pivot about two parallel hinge axes (X), each pivot carrying a respective wing, the vehicle including a first oscillation generator for causing the pivots to oscillate in order to cause the wings to flap, the vehicle being **characterized in that** said first oscillation generator comprises:
• two arms (6), each secured to a respective pivot (2);
• two cranks (9), each hinged to the end of a respective one of the arms about respective axes (X1) parallel to the hinge axes (X) of the pivots;
• a connecting rod (10) hinged to the ends of the two cranks about axes (X2) parallel to the hinge axes (X) of the pivots;
• synchronization means (4) for synchronizing the rotation of the two pivots such that the rotations of the pivots are equal and opposite;
• two electric motors (7), each placed to cause one of the cranks to rotate relative to the associated arm; and
• control means (50) for controlling and synchronizing the speeds of rotation of the motors and for controlling the phase difference between the motors.

2. A flying vehicle according to claim 1, wherein the synchronization means comprise a crossed belt (4) tensioned between the pivots (2).

3. A flying vehicle according to claim 1, wherein the motors are carried at the ends of the arms (6), each crank (9) being secured a rotary end (8) of the corresponding motor.

4. A flying vehicle according to claim 1, wherein the pivots (2) receive pivoting supports (5) that are mounted on the pivots to turn about axes (Y) perpendicular to the hinge axes (X), the wings being connected directly to the pivoting supports, the flying vehicle including a second oscillation generator (11, 12, 13) for causing the pivoting supports to oscillate in order to cause the angles of incidence of the wings to oscillate, said second oscillation generator comprising:
• two drive shafts (13) mounted to turn about the hinge axes of the pivots and connected to rotate with the pivoting supports via respective angle take-offs (11, 12);
• two arms (26), each secured to a respective one of the drive shafts;
• two cranks (29), each hinged to the end of a respective one of the arms about respective axes (X11) parallel to the hinge axes (X) of the pivots;
• a connecting rod (30) hinged to the ends of the two cranks about axes (X22) parallel to the hinge axes (X) of the pivots;
• synchronization means (24) for synchronizing the rotation of the two drive arms such that the rotations of the drive arms are equal and opposite;
• two electric motors (27), each placed to control rotation of a respective one of the cranks relative to the associated arm; and
• control means (50) for controlling and synchronizing the speeds of rotation of the electric motors (27) and for controlling a phase difference between the electric motors (27).

5. A flying vehicle according to claim 4, wherein the synchronization means comprise a crossed belt (24) tensioned between the drive shafts (13).

6. A flying vehicle according to claim 4, wherein the electric motors (27) of the second oscillation generator are carried at the ends of the arms (26), each crank (29) being secured to a rotary end (28) of the corresponding motor.

## Patentansprüche

1. Flugvorrichtung mit schlagenden Flügeln, wobei die Vorrichtung ein Gestell umfasst, an dem zwei Drehzapfen um zwei parallele Gelenkachsen (X) schwenkbar gelagert sind, wobei jeder der Drehzapfen einen Flügel trägt, wobei die Vorrichtung einen ersten Schwingungserzeuger umfasst, der dazu bestimmt ist, eine Schwingung der Drehzapfen zu verursachen, um so ein Schlagen der Flügel zu verursachen, wobei der erste Schwingungserzeuger umfasst:
- zwei Arme (6), die jeweils fest mit einem der Drehzapfen (2) verbunden sind,
- Mittel (4) zum Synchronisieren der Drehung der zwei Drehzapfen derart, dass die Drehzapfen gleich lange und entgegengesetzte Drehungen ausführen,
**dadurch gekennzeichnet, dass** der erste Schwingungserzeuger ferner umfasst:
- zwei Kurbeln (9), die jeweils am Ende eines der Arme um Achsen (X1) angelenkt sind, die parallel zu den Gelenkachsen (X) der Drehzapfen sind,
- eine Kurbelstange (10), die an den Enden der zwei Kurbeln um Achsen (X2) angelenkt ist, die parallel zu den Gelenkachsen (X) der Drehzapfen sind,
- zwei Elektromotoren (7), die so angeordnet sind, dass sie jeweils eine Drehung einer der Kurbeln gegenüber dem dazugehörigen Arm steuern,
- Steuermittel (50) zum Steuern und Synchronisieren der Drehzahl der Motoren und zum Steuern einer Phasenverschiebung zwischen den Motoren.

2. Flugvorrichtung nach Anspruch 1, wobei die Mittel zum Synchronisieren einen gekreuzten Riemen (4) umfassen, der zwischen den Drehzapfen (2) gespannt ist.

3. Flugvorrichtung nach Anspruch 1, wobei die Motoren am Ende der Arme (6) getragen werden, wobei jede Kurbel (9) fest mit einem sich drehenden Ende (8) des entsprechenden Motors verbunden ist.

4. Flugvorrichtung nach Anspruch 1, wobei die Drehzapfen (2) drehbare Träger (5) aufnehmen, die an den Drehzapfen um Achsen (Y) drehbar gelagert sind, die senkrecht zu den Gelenkachsen (X) sind, wobei die Flügel direkt mit den drehbaren Trägern verbunden sind, wobei die Flugvorrichtung einen zweiten Schwingungserzeuger (11, 12, 13) umfasst, der dazu bestimmt ist, eine Schwingung der drehbaren Träger zu verursachen, um so eine Anstellwinkelschwingung der Flügel zu verursachen, wobei der genannte zweite Schwingungserzeuger umfasst:
- zwei Antriebswellen (13), die um die Gelenkachsen der Drehzapfen drehbar gelagert und über Winkeltriebe (11, 12) mit den drehbaren Trägern drehfest verbunden sind,
- zwei Arme (26), die jeweils fest mit einer der Antriebswellen verbunden sind,
- zwei Kurbeln (29), die jeweils an dem Ende eines der Arme um Achsen (X 11) angelenkt sind, die parallel zu den Gelenkachsen (X) der Drehzapfen sind,
- eine Kurbelstange (30), die an den Enden der zwei Kurbeln um Achsen (X22) angelenkt ist, die parallel zu den Gelenkachsen (X) der Drehzapfen sind,
- Mittel (24) zum Synchronisieren der Drehung der zwei Antriebswellen derart, dass die Antriebswellen gleich lange und entgegengesetzte Drehungen ausführen,
- zwei Elektromotoren (27), die so angeordnet sind, dass sie jeweils eine Drehung einer der Kurbeln gegenüber dem dazugehörigen Arm steuern,
- Steuermittel (50) zum Steuern und Synchronisieren der Drehzahl der Elektromotoren (27) und zum Steuern einer Phasenverschiebung zwischen den Elektromotoren (27).

5. Flugvorrichtung nach Anspruch 4, wobei die Mittel zum Synchronisieren einen gekreuzten Riemen (24) umfassen, der zwischen den Antriebswellen (13) gespannt ist.

6. Flugvorrichtung nach Anspruch 4, wobei die Elektromotoren (27) des zweiten Schwingungserzeugers am Ende der Arme (26) getragen werden, wobei jede Kurbel (29) fest mit einem sich drehenden Ende (8) des entsprechenden Motors verbunden ist.
